# EUROPÄISCHE PATENTSCHRIFT

(11) **EP 2 375 264 B1**
(45) Veröffentlichungstag und Bekanntmachung des Hinweises auf die Patenterteilung: **30.05.2012**
(21) Anmeldenummer: 10159384.6
(22) Anmeldetag: 08.04.2010
(51) Int. Cl.: G01S 7/481, G01S 7/486, G01S 7/497, G01S 17/02, G01S 17/42

(54) **Sicherheitsscanner mit Verschmutzungsüberwachung**
Security scanner with contamination monitoring
Scanner de sécurité avec surveillance d'encrassement

(43) Veröffentlichungstag der Anmeldung: 12.10.2011
(73) Patentinhaber: Sick AG, 79183 Waldkirch (DE)
(72) Erfinder: Mack, Stefan, 79104 Freiburg (DE)
(74) Vertreter: Hehl, Ulrich

(56) Entgegenhaltungen:
- EP-A2- 1 329 739
- DE-A1- 4 340 756
- DE-A1- 19 707 418

## Beschreibung

Die Erfindung betrifft einen Sicherheitsscanner und ein Verfahren zur Absicherung eines Gefahrenbereichs nach dem Oberbegriff von Anspruch 1 beziehungsweise 10.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Eine wichtige sicherheitstechnische Anwendung ist die Absicherung von Maschinen, die eine Gefahrenquelle bilden. Der Laserscanner überwacht dabei ein Schutzfeld, das während des Betriebs der Maschine von Bedienpersonal nicht betreten werden darf. Da der Laserscanner Winkel- und Entfernungsinformationen gewinnt, können zweidimensionale Positionen von Objekten in dem Überwachungsbereich und damit auch in dem Schutzfeld bestimmt ermittelt werden. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

Eine weitere Anforderung aus der Norm EN61496-3 ist die Erkennung einer homogenen wie einer inhomogenen Verschmutzung der Frontscheibe des Sicherheitsscanners. Dazu wird beispielsweise in der DE 43 45 446 C2 eine optische Transmissionsmessung mehrerer Bereiche der Frontscheibe vorgenommen, indem das von einer LED ausgestrahlte Licht die Frontscheibe durchdringt und anschließend in einer Fotodiode registriert wird. Ändert sich dabei der Photodiodenstrom hinreichend stark, so wird dies als Verschmutzung interpretiert. Da sowohl die LED als auch die Photodiode für die Frontscheibenüberwachung im Gehäuseinnem untergebracht werden soll, muss die Frontscheibe geneigt sein. Bei einer Überwachung über einen Öffnungswinkel von 180° oder mehr führt dies zu einer Frontscheibe in Form eines Kegelstumpfes, die ein sehr großes Bauvolumen beansprucht.

Eine andere Möglichkeit der Verschmutzungsüberwachung besteht darin, die Rückstreuung an der Frontscheibe auszuwerten, die mit dem Verschmutzungsgrad zunimmt. Diese Rückstreuung ist aber beispielsweise bei schwarzem Staub für eine zuverlässige Messung zu gering. Außerdem wird auf diese Weise eine inhomogene Verschmutzung der Frontscheibe in Bereichen, die nicht vom Sendelicht, sehr wohl aber vom Empfangslicht getroffen werden, überhaupt nicht gemessen.

Die DE 197 07 418 A1 beschreibt einen Laserscanner, der einen üblichen, mit einem Drehspiegel arbeitenden Distanzsensor zur Objekterfassung und einen zusätzlichen Lichttaster zur Kontrolle von Verschmutzungen des Austrittsfensters aufweist. Der zweite Sendestrahl dieser zusätzlichen Lichttasters wird über einen eigenen, quer zum Drehspiegel des Laserscanners schwenkbaren Spiegel geführt, um verschiedene Höhenlagen der Frontscheibe abzutasten. Die entstehenden Testempfangslichtstrahlen werden mit zwei Empfängern registriert, nämlich einem Nahelement und einem Fernelement, wobei eine Optik die Testempfangslichtstrahlen auf eine Blende leitet, wo der äußere Lichtanteil zu dem Nahelement reflektiert und der innere Lichtanteil auf das Fernelement durchgelassen wird.

Aus der EP 1 329 739 A2 ist ein weiterer Laserscanner bekannt, bei dem zur Abdeckung eines größeren Dynamikbereichs drei Empfangskanäle vorgesehen sind. Dazu koppelt ein erster teildurchlässiger Spiegel einen Teil des Empfangslichts auf eine hochempfindliche Avalanche-Diode aus, ein zweiter teildurchlässiger Spiegel lenkt den Großteil des verbleibenden Empfangslichts auf eine PIN-Diode, und das beide teildurchlässige Spiegel transmittierende Restlicht fällt auf eine Photodiode.

Es ist daher Aufgabe der Erfindung, einen Sicherheitsscanner derart weiterzubilden, dass eine zuverlässige und einfache Verschmutzungsüberwachung möglich wird. Diese Aufgabe wird durch einen Sicherheitsscanner gemäß Anspruch 1 und ein Verfahren zur Absicherung eines Überwachungsbereichs gemäß Anspruch 10 gelöst. Dabei geht die Erfindung von dem Grundgedanken aus, Transmissionsmessungen der Frontscheibe in unterschiedlichen Bereichen vornehmen zu können. Dazu werden aus dem remittierten Lichtstrahl mehrere Teilempfangssignale erzeugt. Dafür sorgt eine geteilte Empfangsoptik, die auch als Mehrapertur-Empfangsoptik bezeichnet werden kann. Sie unterteilt die volle Eintrittspupille, die der Größe der Ablenkeinheit entspricht, in mehrere Teilbereiche, die jeweils einen Anteil des remittierten Lichtstrahls auf ein eigenes Lichtempfangselement leiten. Wegen des sehr geringen Abstands der einzelnen optischen Teilelemente der Empfangsoptik entsteht nahezu das selbe Objektbild mehrfach. Der wesentliche Unterschied der verschiedenen Bilder besteht darin, dass sie unterschiedliche Intensitäten aufweisen, welche der Transmissivität in verschiedenen Bereichen der Frontscheibe entsprechen.

Die Erfindung hat den Vorteil, dass mehrere Teilempfangssignale zur Verfügung stehen, mit denen zusätzliche Auswertungen möglich sind. Dadurch lässt sich auch eine normgerechte, sichere Verschmutzungsüberwachung ohne zusätzliche Lichtsender und Lichtempfänger rings um die Frontscheibe realisieren. Diese ermöglicht Bauformen ohne schräg stehende Frontscheibe und damit eine wesentliche Reduktion der Baugröße des Sicherheitsscanners.

Vorteilhafterweise ist eine Verschmutzungs-Überwachungseinheit für eine Frontscheibe des Sicherheitslaserscanners dafür ausgebildet, die Teilempfangssignale miteinander zu vergleichen und ein Wartungssignal auszugeben, wenn sich die Teilempfangssignale voneinander unterscheiden oder sich das Verhältnis der Teilempfangssignale zueinander von einem eingelernten Verhältnis unterscheidet. Sind die optischen Teileelemente untereinander optisch gleichwertig und entsprechend symmetrisch angeordnet, so sind die Teilempfangssignale bei einer sauberen Frontscheibe untereinander gleich. Ebenso ist aber denkbar, anfängliche Abweichungen bei sauberer Frontscheibe einzulernen und dann für eine nicht verschmutzte Frontscheibe anstelle von Gleichheit der Teilempfangssignale nur ein stabiles Verhältnis zu erwarten. Mit dem Begriff Verschmutzung sind auch andere Beeinträchtigungen der Frontscheibe umfasst, wie Manipulationen beispielsweise durch teilweises Abdecken der Frontscheibe.

Die bei dem Vergleich auftretenden Unterschiede müssen nicht automatisch zu einem Wartungssignal führen. Zunächst ist eine erste Toleranzschwelle denkbar, bis zu der Änderungen als unbeachtliche Schwankungen angesehen werden. Auch bei Überschreiten der ersten Toleranzschwelle kann bis zu einer zweiten, höheren Toleranzschwelle noch lediglich eine optische oder akustische Wartungsanforderung ausgegeben werden. Erst eine Überschreitung der höheren Toleranzschwelle wird als Sicherheitsrisiko betrachtet und führt zusätzlich zu einer Wartungsanforderung zu einem sicherheitsgerichteten Abschaltsignal. Der Sicherheitsscanner kann Anzeigemittel umfassen, um anzuzeigen, ob eine Teilverschmutzung erkannt wurde und wie kritisch sie ist.

Die Frontscheibe ist bevorzugt im Wesentlichen zylinderförmig. Die Erfindung ermöglicht eine normgerechte Verschmutzungsüberwachung trotz der Zylinderform. Die herkömmliche schräg gestellte Frontscheibe mit dem voluminösen Kegel wird verzichtbar. Damit sind Reduktionen der Baugröße möglich, bei denen der Scankopf um einen Faktor zwei oder mehr verkleinert wird. Die Frontscheibe ist in der Regel rotationssymmetrisch, bildet also einen Kreiszylinder, muss aber nicht den vollen Öffnungswinkel von 360° umfassen, sondern es sind auch Öffnungswinkel von beispielsweise nur 270°, 190° oder noch weniger denkbar. Auch diese nicht kreiszylinderförmigen und nicht über den vollen Winkel von 360° rotationssymmetrischen Frontscheiben sind hier unter einer im Wesentlichen zylinderförmigen Frontscheibe mit umfasst. Eine weitere zulässige Abweichung stellen direkt im Anschluss noch zu erläuternde Verformungen in der Achse senkrecht zu der Scanebene, also Konturen in Längsrichtung des Zylindermantels dar, die den Durchmesser anders als eine deutlich schräg stehende, kegelförmige Frontscheibe nur geringfügig verändern.

Die Frontscheibe weist bevorzugt zur inhomogenen Ansammlung von Verschmutzung gezielte Verformungen auf. Durch gezielte Formabweichung von einem geraden Zylindermantel, also eine Kontur in Höhenrichtung quer zu der Scanebene, wird verhindert, dass sich Verunreinigungen wie Staub gleichmäßig ansammeln und so zu einer homogenen Verschmutzung führen. Eine völlig homogene Verschmutzung würde alle Teilempfangssignale gleichermaßen betreffen und damit durch einen Vergleich unentdeckt bleiben. Eine beispielhafte Verformung ist eine umlaufende Einschnürung, also eine leichte konkave Wölbung, mit der die Frontscheibe im Ansatz die Form einer Sanduhr annimmt. Ein andere denkbare Verformung ist ein umlaufender Bereich unterschiedlicher Neigung, also beispielsweise eine senkrechte Wandung im unteren Bereich und eine geringe Neigung dagegen im oberen Bereich der Frontscheibe. Dann wird nämlich eine sich ansammelnde Schmutzschicht im oberen Bereich schräg durchlaufen und dämpft den remittierten Lichtstrahl somit stärker, auch wenn die Frontscheibe an sich völlig homogen verunreinigt ist.

Die Frontscheibe ist bevorzugt zur inhomogenen Ansammlung von Verschmutzung in unterschiedlichen Teilbereichen unterschiedlich beschichtet. Dazu kann sie beispielsweise partiell unbeschichtet und partiell mit einer Anti-Fingerprint-Beschichtung versehen werden. Eine solche Beschichtung ist auch mit einer Verformungen kombinierbar. Eine Beschichtung oder Verformung sollte bezüglich einer festen Winkelstellung der Ablenkeinheit so verteilt sein, dass jeweils der auf verschiedene Lichtempfangselemente geleitete remittierte Lichtstrahl unterschiedlich beschichtete oder verformte Bereiche der Frontscheibe durchläuft.

Der Lichtempfänger weist bevorzugt zwei Lichtempfangselemente und die Empfangsoptik zwei optische Teilelemente auf. Die Erfindung umfasst auch den Fall zusätzlicher Teilbereiche, aber eine derart genaue Ortsauflösung der Verschmutzung der Frontscheibe ist praktisch meist nicht von Interesse, zumal zusätzliche Teilbereiche die verfügbare Signalreserve reduzieren. Die optischen Teilelemente weisen noch bevorzugter identische optische Eigenschaften auf. Damit ist die Kombination der intrinsischen optischen Eigenschaften und die Anordnung der optischen Teilelemente in dem Empfangspfad des Sicherheitsscanners gemeint. Bei sauberer Frontscheibe kann dann die Verschmutzungs-Überwachungseinheit zwei gleiche Teilempfangssignale erwarten.

Es ist vorteilhafterweise mindestens ein Signalvorverarbeitungselement vorgesehen, um ein Teilempfangssignal mit dem anderen Teilempfangssignal verzögert und invertiert zu einem bipolaren Empfangssignal zu überlagern. Bei einem pulsbasierten Sicherheitsscanner kann beispielsweise das eine Teilempfangssignal um eine halbe Pulsbreite gegenüber dem anderen Teilempfangssignal verzögert werden. Damit wird eine herkömmlich bestehende Übersteuerungsproblematik in einem Transimpedanzverstärker vermieden, der den Lichtempfangselementen nachgeordnet ist. Außerdem kann dann, wenn die optischen Teilelemente bei sauberer Frontscheibe zwei gleiche Teilempfangssignale erzeugen, die Verschmutzung aus dem bipolaren Signal unmittelbar aus einer Verschiebung des DC-Anteils, also des Mittelwerts, abgeleitet werden.

Eine Auswertungseinheit des Sicherheitsscanners ist bevorzugt dafür ausgebildet, mittels des bipolaren Empfangssignal oder eines oder mehrerer Teilempfangssignale Positionsinformationen über Objekte in dem Überwachungsbereich zu gewinnen. Damit lassen sich die zweidimensionalen Koordinaten sämtlicher Objekte in dem Überwachungsbereich erzeugen. Für diese Auswertung stehen entweder die einzelnen Teilempfangssignale, die bis auf den praktisch nicht relevanten transversalen Versatz dieselben Objektinformationen enthalten, oder Kombinationen der Teilempfangssignale zur Verfügung.

Bevorzugt ist ein sicherer Ausgang vorgesehen, wobei die Auswertungseinheit dafür ausgebildet ist, bei Erkennen eines unzulässigen Eingriffs in ein vorgebbares Schutzfeld innerhalb des Überwachungsbereichs ein Abschaltsignal über den sicheren Ausgang auszugeben. Dies ist eine wichtige Funktion eines Sicherheitsscanners, der in einer typischen Anwendung zur Vermeidung von Unfällen an einer Gefahrenquelle eingesetzt wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch eine erste Ausführungsform eines erfindungsgemäßen Laserscanner mit zylinderförmiger Frontscheibe;
- Fig. 2: eine schematische Schnittdarstellung durch eine zweite Ausführungsform eines erfindungsgemäßen Laserscanner mit einer Einschnürung in der Frontscheibe; und
- Fig. 3: eine schematische Schnittdarstellung durch eine dritte Ausführungsform eines erfindungsgemäßen Laserscanner mit einem geneigten Teilbereich der in der Frontscheibe.

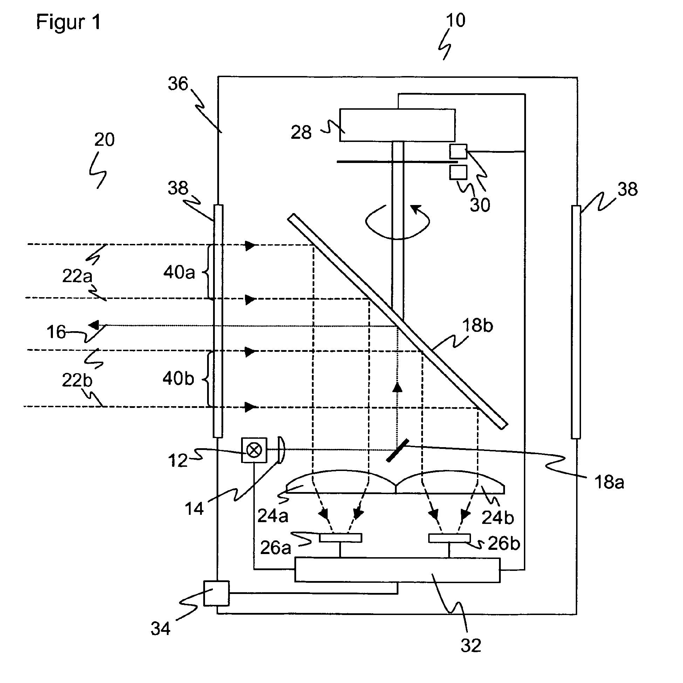

Fig. 1 zeigt eine schematische Schnittdarstellung durch einen erfindungsgemäßen Sicherheitsscanner 10. Ein Lichtsender 12, beispielsweise ein Laser, erzeugt kurze Lichtimpulse. Das Sendelicht wird von einer Sendeoptik 14 zu einem Sendelichtstrahl 16 kollimiert, der über Lichtablenkeinheiten 18a-b in einen Überwachungsbereich 20 gelenkt und dort von einem gegebenenfalls vorhandenen Objekt remittiert wird. Ein Teil des remittierten Lichts kehrt als remittierter Lichtstrahl 22a-b zu dem Sicherheitsscanner 10 zurück und wird von der Ablenkeinheit 18b zu einer Empfangsoptik 24a-b umgelenkt.

Die Empfangsoptik 24a-b ist in zwei getrennte Aperturen aufgeteilt. Die beiden Aperturen werden beispielsweise durch zwei optische Sammellinsen insbesondere exakt gleicher Form und sonstiger optischer Eigenschaften ausgefüllt. Dadurch entstehen effektiv zwei remittierte Lichtstrahlen 22a-b, die in jeweils einem zugeordneten Lichtempfangselement 26a-b detektiert werden.

Die Lichtablenkeinheit 18b ist in der Regel als Drehspiegel ausgestaltet, der durch Antrieb eines Motors 28 kontinuierlich rotiert. Die jeweilige Winkelstellung der Lichtablenkeinheit 18b wird über einen Encoder 30 erfasst. Der von dem Lichtsender 12 erzeugte Lichtstrahl 16 überstreicht somit den durch die Rotationsbewegung erzeugten Überwachungsbereich 20. Wird von dem Lichtempfänger 26a-b ein remittierter Lichtstrahl 22a-b aus dem Überwachungsbereich 20 empfangen, so kann aus der Winkelstellung der Ablenkeinheit 18b mittels des Encoders 30 auf die Winkellage des Objektes in dem Überwachungsbereich 20 geschlossen werden.

Zusätzlich wird die Laufzeit der einzelnen Laserlichtpulse von ihrem Aussenden bis zu dem Empfang nach Reflexion an dem Objekt in dem Überwachungsbereich 20 ermittelt. Aus der Lichtlaufzeit wird unter Verwendung der Lichtgeschwindigkeit auf die Entfernung des Objektes von dem Sicherheitsscanner 10 geschlossen. Diese Auswertung erfolgt in einer beispielsweise als FPGA (Field Programmable Gate Array) ausgebildeten Auswerteeinheit 32, die dafür mit dem Lichtsender 12, dem Lichtempfänger 26a-b, dem Motor 28 und dem Encoder 30 verbunden ist.

Über den Winkel und die Entfernung stehen dann zweidimensionale Polarkoordinaten aller Objekte in dem Überwachungsbereich 20 zur Verfügung. In dem Überwachungsbereich 20 können somit zweidimensionale Schutzfelder definiert werden, in die unzulässige Objekte wie Bedienpersonen oder deren Körperteile nicht eingreifen dürfen. Erkennt die Auswertungseinheit 32 einen unzulässigen Schutzfeldeingriff, so wird über einen sicheren Ausgang 34 (OSSD, Output Signal Switching Device) ein sicherheitsgerichtetes Abschaltsignal ausgegeben, um beispielsweise eine überwachte gefährliche Maschine anzuhalten oder in eine ungefährliche Position zu verbringen.

Alle genannten Funktionskomponenten sind in einem Gehäuse 36 angeordnet, das im Bereich des Lichtaus- und Lichteintritts eine Frontscheibe 38 aufweist. Die Frontscheibe 38 hat eine zylindrische Form mit geraden Seitenwänden. Abweichend ist eine geringfügige Neigung denkbar, um direkte Reflexionen des Sendelichtstrahls 16 in den Empfänger 26a-b zu vermeiden oder zumindest zu reduzieren. Der Flächenanteil der Frontscheibe 38 an dem Gehäuse 36 kann von der Darstellung abweichen.

Aufgrund der geteilten Empfangsoptik 24a-b sowie des zwei Lichtempfangselemente 26a-b aufweisenden Lichtempfängers werden zwei nahezu gleiche, lediglich minimal transversal versetzte Bilder des Laserspots auf dem angetasteten Objekt erzeugt. Die beiden Bilder unterscheiden sich deshalb praktisch nur darin, dass die zugehörigen remittierten Lichtstrahlen 22a-b unterschiedliche Bereiche 40a-b der Frontscheibe 38 durchlaufen. Dabei ist die relative Lage der Bereiche 40a-b von der Winkelstellung der Ablenkeinheit 18b abhängig. In der um 180° gedrehten Winkelstellung liegt der Bereich 40a, den der erste remittierte Lichtstrahl 22a durchläuft und der in dem ersten Lichtempfänger 26a registriert wird, nicht mehr oberhalb, sondern unterhalb des Bereichs 40b, den der zweite remittierte Lichtstrahl 22b durchläuft, der in dem zweiten Lichtempfänger 26b registriert wird. In anderen Winkelstellungen der Ablenkeinheit 18b nehmen die Bereiche 40a-b entsprechende Zwischenlagen zueinander ein. Diese relative Lageänderung der Bereiche 40a-b mit der Drehbewegung ändert aber nichts daran, dass zwei nahezu gleiche Bilder des Laserspots entstehen und die erzeugenden remittierten Lichtstrahlen 22a-b unterschiedliche Bereiche 40a-b der Frontscheibe 38 durchlaufen.

Die Auswertungseinheit 32 nutzt die beiden Teilempfangssignale für eine Verschmutzungsüberwachung der Frontscheibe 38. Bei gleichen optischen Eigenschaften der beiden Subaperturen der Empfangsoptik 24a-b besitzen die Teilempfangssignale bei sauberer Frontscheibe 38 unabhängig von der Winkelstellung der Ablenkeinheit 18b eine identische Pulshöhe. Eine durch Vergleich festgestellte relative Änderung der Pulshöhen wird deshalb als Verschmutzung der Frontscheibe 38 interpretiert. Dabei werden kleinere Abweichungen als für die Messung nicht relevant hingenommen. Erst größere Abweichungen führen zu einer Wartungsanforderung. Wenn die sichere Objekterkennung nicht mehr gewährleistet ist, wird zugleich ein sicherheitsgerichtetes Abschaltsignal über den Ausgang 34 ausgegeben.

Es ist nicht zwingend erforderlich, die Empfangsoptik 24a-b in Subaperturen mit identischen optischen Eigenschaften aufzuteilen. Gezielt oder durch Toleranzen eingeführte optische Aberrationen können dazu führen, dass die Teilempfangssignale schon bei sauberer Frontscheibe 38 differieren. Dann wird bei sauberer Frontscheibe 38 eine anfängliche Abweichung eingelernt, und im weiteren Betrieb wird erwartet, dass diese Abweichung erhalten bleibt.

Diese Art der Verschmutzungsüberwachung erlaubt eine zylinderförmige Frontscheibe 38, welche in der Scanebene zu einer erheblichen Reduktion des benötigten Bauvolumens führt. Dabei bezeichnet die Scanebene den von dem Sendelichtstrahl 16 mit der Drehbewegung der Ablenkeinheit 18b abgetasteten Überwachungsbereich 20. Die geteilte Empfangsoptik 24a-b ermöglicht aber auch eine kleinere Höhe des Sicherheitsscanners 10, also eine geringere Ausdehnung in der Drehachse senkrecht zu der Scanebene. Denn die Gesamtapertur, also der Querschnitt, in den die Ablenkeinheit 18b remittiertes Licht 22 umlenkt und der in herkömmlichen Systemen von einer einzigen Linse abgedeckt wird, ist in die beiden Einzellinsen 24a-b der Empfangsoptik aufgeteilt. Diese Einzellinsen 24a-b können dann wegen ihrer geringeren Abmessungen eine geringere Brennweite und Mittendicke besitzen. Dadurch kann der Abstand zwischen Empfangsoptik 24a-b und Lichtempfänger 26a-b signifikant verkleinert werden. Alternativ ist auch vorstellbar, ein Mikrolinsenarray zu verwenden, bei dem jeweils eine Hälfte der Linsen mit ihren optischen Achsen so ausgerichtet ist, dass sie Licht aus jeweils nur einem Bereich 40a-b der Frontscheibe 38 auf das zugehörige Lichtempfangselement 26a-b lenken.

Die beiden in den Empfangselementen 26a-b erzeugten Teilempfangssignale sind jeweils für sich geeignet, sämtliche relevanten Objektpositionen in dem Überwachungsbereich 20 zu gewinnen. Damit kann entweder ein beliebiges Teilempfangssignal für die Auswertung ausgewählt werden, oder es wird eine redundante oder gemittelte Auswertung vorgenommen. Bevorzugt wird eines der beiden Teilempfangssignale um eine halbe Pulsbreite beispielsweise in einer Koaxialleitung verzögert und analog von dem anderen Teilempfangssignal abgezogen. Dabei entsteht ein bipolarer Empfangspuls, der idealerweise symmetrisch zur Nulllinie ist. Der bipolare Empfangspuls hat den Vorteil, dass er DC-frei ist, also keinen Gleichanteil aufweist, und deshalb in einem den Lichtempfangselementen 26a-b nachgeordneten Verstärker eine Übersteuerung vermeidet. Ein Gleichanteil bedeutet, dass die beiden Teilempfangssignale nicht mehr gleichwertig sind, und wird als Verschmutzung interpretiert. Dies ermöglicht eine besonders einfache Verschmutzungserkennung anhand des zeitlichen Mittelwerts des Empfangspulses.

Mit der beschriebenen ersten Ausführungsform wird anhand der unterschiedlichen Transmission in den Bereichen 40a-b eine Verschmutzung der Frontscheibe 38 erkannt, wenn diese in irgend einer Winkelstellung inhomogen ist. Praktisch ist dies meist gegeben, da üblicherweise je nach Einbaulage des Sicherheitsscanners 10 unterschiedliche Bereiche der Frontscheibe 38 unterschiedlich stark verschmutzen. Um auch eine in allen Richtungen homogene Verschmutzung der gesamten Frontscheibe 38 zu erkennen, sind Modifikationen der Form der Frontscheibe 38 möglich.

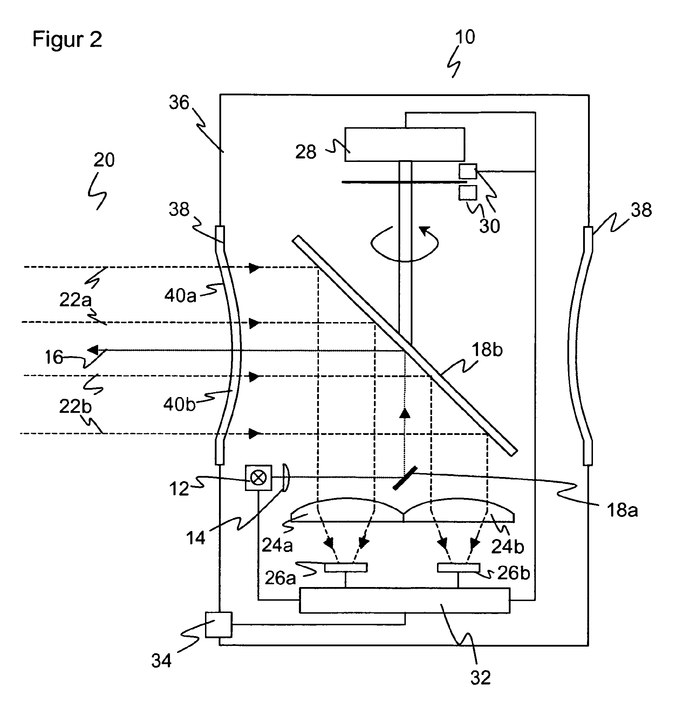

Figur 2 zeigt hierzu eine weitere Ausführungsform des erfindungsgemäßen Sicherheitsscanners 10. Dabei bezeichnen hier wie im Folgenden gleiche Bezugszeichen die gleichen Merkmale. Im Unterschied zu der Ausführungsform der Figur 1 ist die Zylinderform der Frontscheibe 38 leicht konkav gewölbt. Dadurch sammelt sich beispielsweise Staub ungleichmäßig an. Bei senkrechter Montage etwa wird deshalb der Bereich 40b schneller verschmutzen als der Bereich 40a.

Zusätzlich oder alternativ ist denkbar, die Frontscheibe 38 strukturiert zu beschichten, also beispielsweise unbeschichtete und mit einer Anti-Fingerprint-Beschichtung versehene Teilbereiche vorzusehen. Mit diesen Maßnahmen wird in aller Regel eine völlig homogene Verschmutzung vermieden.

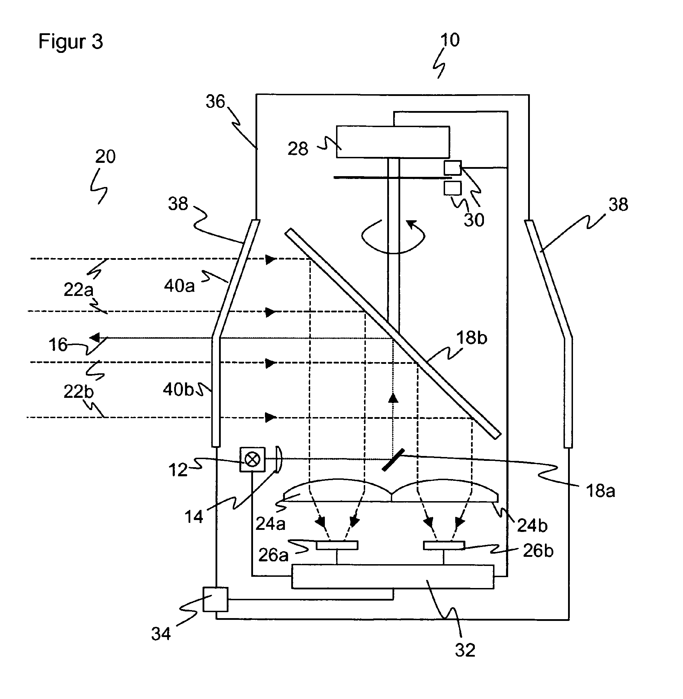

Auch der Fall einer absolut homogenen Verschmutzung der Frontscheibe 38 lässt sich mittels der geteilten Empfangsoptik 24a-b erkennen. Figur 3 zeigt eine weitere Ausführungsform des Sicherheitsscanners 10, bei dem ein Bereich 40a der Frontscheibe 38 eine andere Neigung aufweist als ein anderer Bereich 40b. Die Neigung kann geringer sein als dargestellt, um möglichst wenig von der raumsparenden Zylinderform abzuweichen. Durch die unterschiedliche lokale Neigung der beiden Frontscheibenbereiche 40a-b zu der optischen Achse des Empfangspfades muss ein remittierter Lichtstrahl 22a aufgrund des flacheren Einfallswinkels eine scheinbar dickere Verschmutzungsschicht durchlaufen. Dadurch wird auch eine vollkommen homogene Verschmutzung erfassbar.

Damit werden erfindungsgemäß sowohl homogene als auch inhomogene Verschmutzungen sicher erkannt. Neben einer Verschmutzung können mit diesen Anordnungen auch Manipulationen wie beispielsweise ein teilweises Abdecken der Frontscheibe 38 erkannt werden.

## Patentansprüche

1. Sicherheitslaserscanner (10) zur Absicherung eines Überwachungsbereichs (20) mit einem Lichtsender (12) zum Aussenden eines Lichtstrahls (16), einer Ablenkeinheit (18) zur periodischen Ablenkung des Lichtstrahls (16) in dem Überwachungsbereich (20), einem Lichtempfänger (26) zum Erzeugen eines Empfangssignals aus dem von Objekten in dem Überwachungsbereich (20) remittierten Lichtstrahl (22) und einer dem Lichtempfänger (26) vorgeordneten Empfangsoptik (24),wobei der Lichtempfänger mehrere Lichtempfangselemente (26a-b) und die Empfangsoptik mehrere optische Teilelemente (24a-b) aufweist, um jeweils einen Anteil (22a-b) des remittierten Lichtstrahls mittels eines optischen Teilelements (24a-b) auf ein zugeordnetes Lichtempfangselement (26ab) zu führen und somit mehrere Teilempfangssignale zu erzeugen,
**dadurch gekennzeichnet,**
**dass** die Lichtempfangselemente (26a-b) und die optischen Teilelemente (24a-b) dafür ausgebildet sind, dass die Anteile (22a-b) des remittierten Lichtstrahls unterschiedliche Bereiche (40a-b) der Frontscheibe (38) durchlaufen und dass eine Auswertungseinheit (32) des Sicherheitsscanners (10) dafür ausgebildet ist, mittels eines oder mehrerer Teilempfangssignale Positionsinformationen über Objekte in dem Überwachungsbereich (20) zu gewinnen.

2. Sicherheitslaserscanner (10) nach Anspruch 1,
wobei eine Verschmutzungs-Überwachungseinheit (32) für eine Frontscheibe (38) des Sicherheitslaserscanners (10) dafür ausgebildet ist, die Teilempfangssignale miteinander zu vergleichen und ein Wartungssignal auszugeben, wenn sich die Teilempfangssignale voneinander unterscheiden oder sich das Verhältnis der Teilempfangssignale zueinander von einem eingelernten Verhältnis unterscheidet.

3. Sicherheitslaserscanner (10) nach Anspruch 2,
wobei die Frontscheibe (38) im Wesentlichen zylinderförmig ist.

4. Sicherheitslaserscanner nach Anspruch 2 oder 3,
wobei die Frontscheibe (38) zur inhomogenen Ansammlung von Verschmutzung gezielte Verformungen aufweist, insbesondere eine umlaufende Einschnürung oder umlaufende Bereiche unterschiedlicher Neigung.

5. Sicherheitslaserscanner (10) nach einem der Ansprüche 2 bis 4,
wobei die Frontscheibe (38) zur inhomogenen Ansammlung von Verschmutzung in unterschiedlichen Teilbereichen unterschiedlich beschichtet ist.

6. Sicherheitslaserscanner (10) nach einem der vorhergehenden Ansprüche,
wobei der Lichtempfänger zwei Lichtempfangselemente (26a-b) und die Empfangsoptik zwei optische Teilelemente (24a-b) insbesondere untereinander gleicher optischer Eigenschaften aufweist.

7. Sicherheitslaserscanner (10) nach einem der vorhergehenden Ansprüche,
wobei mindestens ein Signalvorverarbeitungselement vorgesehen ist, um ein Teilempfangssignal mit dem anderen Teilempfangssignal verzögert und invertiert zu einem bipolaren Empfangssignal zu überlagern.

8. Sicherheitslaserscanner (10) nach Anspruch 7,
wobei die Auswertungseinheit (32) dafür ausgebildet ist, Positionsinformationen über Objekte in dem Überwachungsbereich (20) mittels des bipolaren Empfangssignals zu gewinnen.

9. Sicherheitslaserscanner (10) nach einem der vorhergehenden Ansprüche,
wobei ein sicherer Ausgang (34) vorgesehen ist, und wobei die Auswertungseinheit (32) dafür ausgebildet ist, bei Erkennen eines unzulässigen Eingriffs in ein vorgebbares Schutzfeld innerhalb des Überwachungsbereichs (20) ein Abschaltsignal über den sicheren Ausgang (34) auszugeben.

10. Verfahren zur Absicherung eines Überwachungsbereichs (20) mit einem Sicherheitslaserscanner (10), bei dem ein Lichtstrahl (16) ausgesandt wird, der durch periodisches Ablenken den Überwachungsbereich (20) abtastet, und aus dem von Objekten in dem Überwachungsbereich (20) remittierten Lichtstrahl (22) ein Empfangssignal erzeugt wird, wobei mittels einer geteilten Empfangsoptik mit mehreren optischen Teilelementen (24a-b) jeweils ein Anteil (22a-b) des remittierten Lichtstrahls auf jeweils eines von mehreren Lichtempfangselementen (26a-b) geführt wird, um so mehrere Teilempfangssignale zu erzeugen, **dadurch gekennzeichnet,**
**dass** mittels eines oder mehrerer Teilempfangssignale Positionsinformationen über Objekte in dem Überwachungsbereich (20) erzeugt werden und dass die Anteile (22a-b) des remittierten Lichtstrahls unterschiedliche Bereiche (40a-b) der Frontscheibe (38) durchlaufen.

11. Verfahren nach Anspruch 10,
wobei zur Verschmutzungsüberwachung einer Frontscheibe (38) des Sicherheitslaserscanners (10) oder zur Erkennung von Manipulationen der Frontscheibe (38) die Teilempfangssignale miteinander verglichen und ein Wartungssignal ausgegeben wird, wenn sich die Teilempfangssignale voneinander unterscheiden oder sich das Verhältnis der Teilempfangssignale zueinander von einem eingelernten Verhältnis unterscheidet.

12. Verfahren nach Anspruch 10 oder 11,
wobei zwei Teilempfangssignale mit Hilfe einer Empfangsoptik mit zwei optischen Teilelementen (24a-b) erzeugt werden.

13. Verfahren nach Anspruch 12,
wobei das eine Teilempfangssignal verzögert und invertiert mit dem anderen Teilempfangssignal zu einem bipolaren Empfangssignal überlagert wird.

14. Verfahren nach Anspruch 13,
wobei Positionsinformationen über Objekte in dem Überwachungsbereich (20) mittels des bipolaren Empfangssignal erzeugt werden.

15. Verfahren nach einem der Ansprüche 10 bis 14,
wobei bei Erkennen eines unzulässigen Eingriffs in ein vorgebbares Schutzfeld innerhalb des Überwachungsbereichs (20) ein Abschaltsignal über einen sicheren Ausgang (34) ausgegeben wird.

## Claims

1. A safety laser scanner (10) for the protection of a monitored area (20) with a light transmitter (12) for transmitting a light beam (16), a deflection unit (18) for periodically deflecting the light beam (16) in the monitored area (20), a light receiver (26) for generating a reception signal from a remitted light beam (22) remitted from objects in the monitored area (20), and reception optics (24) arranged in front of the light receiver (26), wherein the light receiver comprises multiple light reception elements (26a-b) and the reception optics (24) comprise multiple optical partial elements (24a-b) in order to guide a respective part (22a-b) of the remitted light beam by means of an optical partial element (24a-b) to an associated light reception element (26a-b) and to thereby generate multiple partial reception signals,
**characterized in that**
the light reception elements (26a-b) and the optical partial elements (24a-b) are configured such that the parts (22a-b) of the remitted light beam transmit different areas (40a-b) of the front screen (38), and **in that** an evaluation unit (32) of the safety scanner (10) is configured to generate position information about objects in the monitored area (20) from one or multiple partial reception signals.

2. The safety laser scanner (10) according to claim 1,
wherein a contamination monitoring unit (32) for a front screen (38) of the safety laser scanner (10) is configured to compare the partial reception signals with each other and to output a service signal when the partial reception signals are different from one another or when the ratio among the partial reception signals differs from a ratio as taught.

3. The safety laser scanner (10) according to claim 2,
wherein the front screen (38) is essentially cylindrical-shaped.

4. The safety laser scanner (10) according to claim 2 or 3,
wherein the front screen (38) comprises intentional deformations for the inhomogenous collection of contamination, in particular a circumferential waist or differently skewed circumferential areas.

5. The safety laser scanner (10) according to any of claims 2 to 4,
wherein the front screen (38) is differently coated in different partial areas for the inhomogenous collection of contamination.

6. The safety laser scanner (10) according to any of the preceding claims,
wherein the light receiver comprises two light reception elements (26a-b) and the reception optics comprise two optical partial elements (24a-b), in particular having mutually identical optical properties.

7. The safety laser scanner (10) according to any of the preceding claims,
wherein at least one signal preprocessing element is provided to overlap one partial reception signal with another partial reception signal delayed and inverted to a bipolar reception signal.

8. The safety laser scanner (10) according to claim 7,
wherein the evaluation unit (32) is configured to generate position information about objects in the monitored area (20) by means of the bipolar reception signal.

9. The safety laser scanner (10) according to any of the preceding claims,
wherein a safe output (34) is provided, and wherein the evaluation unit (32) is configured to output a shutdown signal via the safe output (34) upon detection of a forbidden intrusion into a configurable protected zone within the monitored area (20).

10. A method for the protection of a monitored area (20) with a safety laser scanner (10), wherein a light beam (16) is transmitted that scans the monitored area (20) by means of a periodic deflection, and wherein a reception signal is generated from the remitted light beam (22) remitted from objects in the monitored area (20), wherein by divided reception optics with multiple optical partial elements (24a-b) a respective part (22a-b) of the remitted light beam is guided to one of multiple respective light reception elements (26a-b) in order to generate multiple partial reception signals,
**characterized in that**
position information about objects in the monitored area (20) is generated from one or multiple partial reception signals, and **in that** the parts (22a-b) of the remitted light beam transmit different areas (40a-b) of the front screen (38).

11. The method according to claim 10,
wherein the partial reception signals are compared with each other for the contamination monitoring of a front screen (38) of the safety laser scanner (10) or for the detection of manipulations of the front screen (38), and wherein a service signal is output when the partial reception signals are different from one another or when the ratio among the partial reception signals differs from a ratio as taught.

12. The method according to claim 10 or 11,
wherein two partial reception signals are generated by means of reception optics having two optical partial elements (24a-b).

13. The method according to claim 12,
wherein the one partial reception signal is overlapped with the other partial reception signal delayed and inverted to a bipolar reception signal.

14. The method according to claim 13,
wherein position information about objects in the monitored area (20) is generated by means of the bipolar reception signal.

15. The method according to any of claims 10 to 14,
wherein a shutdown signal is output via a safe output (34) upon detection of a forbidden intrusion into a configurable protected zone within the monitored area (20).

## Revendications

1. Scanner laser de sécurité (10) pour la protection d'une zone surveillée (20) avec un émetteur de lumière (12) pour émettre un faisceau lumineux (16), un dispositif de déviation (18) pour dévier périodiquement le faisceau lumineux (16) dans la zone surveillée (20), un récepteur de lumière (26) pour générer un signal de réception à partir d'un faisceau lumineux (22) remis par des objets dans la zone surveillée (20), et une optique de réception (24) arrangée devant le récepteur de lumière (26), et le récepteur de lumière comprend plusieurs éléments de réception de lumière (26a-b) et l'optique de réception (24) comprend plusieurs éléments d'optique partiels (24a-b) pour guider respectivement une fraction (22a-b) du faisceau de lumière remis sur un élément de réception de lumière associé (26a-b) à un élément d'optique partiel (24a-b) et ainsi générer des multiples signaux de réception partielle, **caractérisé en ce que** les éléments de réception de lumière (26a-b) et les éléments d'optique partiels (24a-b) sont configurés de telle sorte que les fractions (22a-b) du faisceau lumineux remis traversent différentes domaines (40a-b) de la vitre avant (38), et **en ce qu'**une unité d'évaluation (32) du scanner de sécurité (10) est configurée pour générer des informations de position des objets dans la zone surveillée (20) d'un ou plusieurs signaux de réception partielle.

2. Scanner laser de sécurité (10) selon la revendication 1, **caractérisé en ce qu'**une unité de surveillance de la contamination (32) pour la vitre avant (38) du scanner laser de sécurité (10) est configurée pour comparer les signaux de réception partielle entre eux et pour donner un signal de service lorsque les signaux de réception partielle sont différents l'un de l'autre ou lorsque le rapport entre les signaux de réception partielle diffère d'un ratio calibré initialement.

3. Scanner laser de sécurité (10) selon la revendication 2, **caractérisé en ce que** la vitre avant (38) est essentiellement de forme cylindrique.

4. Scanner laser de sécurité (10) selon la revendication 2 ou 3, **caractérisé en ce que** la vitre avant (38) comporté des déformations intentionnelles pour l'accumulation hétérogène de contamination, en particulier une ceinture circonférentielle ou des zones circonférentielles avec des inclinations différentes.

5. Scanner laser de sécurité (10) selon l'une des revendications 2 à 4, **caractérisé en ce que** pour l'accumulation hétérogène de contamination, la vitre avant (38) est affichée différente dans les différentes zones partielles.

6. Scanner laser de sécurité (10) selon l'une des revendications précédentes, **caractérisé en ce que** le récepteur de lumière comprend deux éléments de réception de lumière (26a-b) et l'optique de réception comprend deux éléments d'optiques partiels (24a-b), en particulier ayant identiques entre les propriétés optiques.

7. Scanner laser de sécurité (10) selon l'une des revendications précédentes, **caractérisé en ce qu'**au moins un élément de pré-traitement du signal est fourni pour superposer un signal de réception partielle retardé et inversé d'un signal de réception bipolaire avec un autre signal de réception partielle.

8. Scanner laser de sécurité (10) selon la revendication 7, **caractérisé en ce que** l'unité d'évaluation (32) est configurée pour générer des informations de position des objets dans la zone surveillée (20) par le signal de réception bipolaire.

9. Scanner laser de sécurité (10) selon l'une des revendications précédentes, **caractérisé en ce qu'**une sortie de sécurité (34) est fournie, et **en ce que** l'unité d'évaluation (32) est configurée pour émettre un signal d'arrêt via la sortie de sécurité (34) lors de la détection d'une intrusion interdite dans une zone protégée pré-déterminable dans la zone surveillée (20).

10. Procédé pour la protection d'une zone surveillée (20) avec un scanner laser de sécurité (10) dans lequel un faisceau de lumière (16) est transmis qui scanne la zone surveillée (20) par le biais d'une déviation périodiques, et dans lequel un signal de réception est généré à partir du faisceau lumineux remis (22) par les objets dans la zone surveillée (20), et une fraction (22a-b) du faisceau de lumière remis est guidée d'un des multiples éléments respectifs de réception de lumière (26a-b) par une optique de réception partagée avec plusieurs éléments optiques partiels (24a-b) afin de générer des multiples signaux de réception partielle, **caractérisé en ce que** des informations de position des objets dans la zone surveillée (20) sont générées à partir d'un ou plusieurs signaux de réception partielle, et **en ce que** les fractions (22a-b) du faisceau de lumière remis traversent des différentes zones (40a-b) de la vitre avant (38).

11. Procédé selon la revendication 10, **caractérisé en ce que** pour la surveillance de la contamination d'une vitre avant (38) du scanner laser de sécurité (10) ou pour la détection des manipulations de la vitre avant (38), les signaux de réception partielle sont comparés entre eux et un signal de service sera émis lorsque les signaux de réception partielle sont différents l'un de l'autre ou lorsque le rapport entre les signaux de réception partielle diffère d'un ratio calibré initialement.

12. Procédé selon la revendication 10 ou 11, **caractérisé en ce que** deux signaux de réception partielle sont générés par des moyens de réception optiques qui ont deux éléments optiques partielle (24a-b).

13. Procédé selon la revendication 12, **caractérisé en ce que** l'un des signaux de réception partielle est superposé retardé et est inversé avec l'autre signal de réception partielle.

14. Procédé selon la revendication 13, **caractérisé en ce que** des informations des positions des objets dans la zone surveillée (20) sont générées au moyen du signal bipolaire de réception.

15. Procédé selon l'une des revendications 10 à 14, **caractérisé en ce qu'**un signal d'arrêt est émis via une sortie de sécurité (34) lors de la détection interdite d'une intrusion dans une zone protégée pré-déterminable dans la zone surveillée (20).
